(19) **Europäisches Patentamt European Patent Office Office européen des brevets**

(11) **EP 4 700 365 A1**

(12) **EUROPEAN PATENT APPLICATION**

(43) Date of publication:
25.02.2026 Bulletin 2026/09

(21) Application number: 25197522.3

(22) Date of filing: 22.08.2025

(51) International Patent Classification (IPC):
**G01N 21/03** (2006.01)   **G01N 21/3504** (2014.01)
**G01N 21/61** (2006.01)   G01N 21/31 (2006.01)

(52) Cooperative Patent Classification (CPC):
**G01N 21/3504; G01N 21/0303; G01N 21/031;**
G01N 21/61; G01N 2021/3137; G01N 2021/3148;
G01N 2021/3174; G01N 2021/3177;
G01N 2201/0668; G01N 2201/1241

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 23.08.2024 US 202418813365

(71) Applicants:
• **Services Pétroliers Schlumberger**
**75007 Paris (FR)**
Designated Contracting States:
**FR**

• **Schlumberger Technology B.V.**
**2514 JG The Hague (NL)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **JONES, Timothy Gareth John**
**Cottenham, CB24 8QS (GB)**
• **CAMPOS DE FARIA, Debora**
**Cambridge, CB3 0EL (GB)**
• **GEDDES, Jill**
**Cambridge, CB3 0EL (GB)**

(74) Representative: **Schlumberger Intellectual Property Department**
**Parkstraat 83**
**2514 JG Den Haag (NL)**

(54) **MEASUREMENT OF MULTIPLE GAS CONCENTRATIONS**

(57) The concentration of one or more gases in a surrounding fluid is measured using apparatus having a gas-permeable membrane separating an enclosed internal space within the apparatus from the surrounding fluid while allowing gases to diffuse from the surrounding fluid into the internal space. One or more sources sends infrared radiation along optical paths to one or more infrared detectors measuring intensity of radiation after absorption by gas(es) in the internal space and concentrations are determined from measured absorptions. The apparatus has more than one optical path through the internal space, enabling measurements of concentration over a greater range or enabling measurements of more than one gas present in very different concentrations or having very different infrared absorptivities.

Fig 1

EP 4 700 365 A1

**Description**

FIELD

This disclosure relates to the measurement of gases present in a fluid. The fluid may be a liquid, or may be a gas.

BACKGROUND

One approach to sampling and measuring gases present in a liquid is to provide apparatus in which space within the apparatus is separated from liquid outside the apparatus by a gas-permeable membrane. Such a membrane allows gas to enter a chamber within the apparatus and the amount of gas can then be measured. Such a membrane can also allow gas to enter from a surrounding gas, while excluding any liquid present, for instance as splashes or rain droplets,

A number of technologies have been proposed for measuring gas which has entered such apparatus through a membrane. Society of Petroleum Engineers paper SPE62525 describes a device for measurement of gases brought to the surface by the circulation of drilling fluid as a borehole is drilled. Gaseous hydrocarbon from the fluid enters a probe through a semipermeable membrane and is carried away from the membrane by a flow of carrier gas. The hydrocarbon gas in the gas stream is then separated and analyzed with a gas chromatograph. See Brumboiu, A. O., Hawker, D. P., Norquay, D. A., and D. K. Wolcott. "Application of Semipermeable Membrane Technology in the Measurement of Hydrocarbon Gases in Drilling Fluids." Paper presented at the SPE/AAPG Western Regional Meeting, Long Beach, California, June 2000. Paper Number: SPE-62525-MS, doi: https://doi.org/10.2118/62525-MS.

US Patent 7,434,446 describes a gas-detection system in which gas enters through a semi-permeable membrane. Detectors mentioned as possibilities for measuring the gas which has entered are a gas chromatograph, a mass spectrometer, and an optical cell. US Patent 10,018,606 shows a device in which gas enters through a semipermeable membrane and is circulated through a measurement cell which may use a non-dispersive infrared (NDIR) detector for detecting methane and which can also be used for detecting carbon-dioxide generated within the device as a reference gas.

SUMMARY

This summary is provided to introduce concepts that will be further elaborated and described below in the detailed description. This summary is not intended to identify key or essential features of the claimed subject matter, nor is it intended to be used as an aid in limiting the scope of the claimed subject matter.

The present disclosure provides apparatus for measuring the concentration of one or more gases present in a surrounding fluid, including: an enclosed internal space within the apparatus to receive gas or gases from the surrounding fluid, with at least one inlet to the internal space comprising a gas-permeable membrane separating the internal space from surrounding fluid while allowing gases to diffuse from the surrounding fluid into the internal space, at least one infrared radiation source to send infrared radiation into the internal space, at least one infrared radiation detector with connected circuitry to receive and measure the intensity of infrared radiation from the at least one source, and at least two optical paths each extending from an infrared radiation source through the internal space to an infrared radiation detector, wherein the infrared radiation detector for each path is operable to measure the intensity of radiation at a specific wavelength, wherein the at least two optical paths comprise first and second optical paths which have different path lengths through the internal space.

Provision of at least two paths of different length extends the capability of the apparatus. One possibility is to extend the range of concentration over which a gas can be measured. This would be useful if the expected range of concentration to be measured is large or is unknown.

Another possibility is that the apparatus is configured to measure the concentrations of more than one gas in a mixture of gases entering through the membrane. For this an infrared radiation detector which receives infrared radiation from the first optical path is operable to measure the intensity of radiation at a first specific wavelength, which is a wavelength absorbed by the first gas, and an infrared radiation detector which receives infrared radiation from the second optical path and is operable to measure the intensity of radiation at a second specific wavelength which is a wavelength absorbed by the second gas and is different from the first specific wavelength. As will be explained below, in some embodiments a single detector may receive infrared radiation from more than one optical path and be operable to measure intensities at more than one specific wavelength. As above, the lengths of the first and second optical paths are different. This form of the apparatus may be useful for measurement of gases in a mixture where two (or more) gases are present with a large difference in their concentrations or where two (or more) gases have a large difference in absorptivity.

The number of optical paths is not limited and in some embodiments there is a third optical path through the internal space. An infrared radiation detector which receives infrared radiation from this third optical path may be operable to measure the intensity of radiation at a third specific wavelength which may be a reference wavelength and which is not absorbed by either the first gas or the second gas of a mixture.

Two or more optical paths of different lengths and measurement of infrared radiation intensity at one or more specific wavelengths can be provided by various forms of apparatus. Each optical path may extend from a radiation source to a radiation detector, passing through a narrow bandpass filter which determines the specific wavelength at which the detector measures intensity. One possibility is to provide a single infrared radiation source which is a broadband source (i.e. it emits infrared radiation over a range of wavelengths) sending radiation along at least two optical paths to two or more infrared detectors and includes a narrow bandpass filter in each optical path so that each detector receives and measures infrared radiation at a specific wavelength passed by the filter. A converse possibility is to provide at least two broadband infrared radiation sources sending infrared radiation through narrow bandpass filters along separate optical paths leading to a single detector, and to operate the sources alternately.

Some embodiments of this disclosure may measure more than two gases and may measure more than one gas using the same optical path but a separate specific wavelength for each gas. This may be done using a mechanism to change narrow bandpass filters in the optical path. Another possibility is to use a spectrophotometer as the infrared radiation receiver. A spectrophotometer separates incoming radiation into its spectrum of wavelengths and measures intensity at each wavelength. A spectrophotometer might also be used if the apparatus is intended to measure the concentration of a single gas. It could enable the apparatus to be used for different gases at different times.

The present disclosure also provides a method of measuring concentrations of one or more gases in a surrounding fluid including providing apparatus comprising an enclosed internal space with a gas-permeable membrane at an inlet thereto, at least one infrared radiation source to send infrared radiation into the internal space and at least one infrared radiation detector with connected circuitry to receive and measure the intensity of infrared radiation from the at least one source; placing the membrane of the apparatus in contact with the surrounding fluid, and allowing gas to diffuse from the surrounding fluid through the gas permeable membrane into the internal space of the apparatus; sending infrared radiation along first and second optical paths each extending from an infrared radiation source through the internal space to an infrared radiation detector, wherein the first and second optical paths have different path lengths through the internal space; and operating the at least one detector to measure the intensities of infrared radiation of one or more specific wavelengths received along the first and second optical paths, and computing at least one gas concentration from the measured intensities.

The method may be a method of measuring at least two gases of a mixture entering the internal space from the surrounding fluid. The method may then comprise operating the infrared detector which receives infrared radiation from first optical path to measure the intensity of radiation at a first specific wavelength absorbed by a first gas of the mixture and operating the infrared radiation detector which receives infrared radiation from the second optical path to measure the intensity of radiation at a second specific wavelength which is different from the first specific wavelength and is absorbed by a second gas of the mixture, and computing at least two gas concentrations from the measurements. In some instances of this, the second gas which is measured is at a lower concentration than the first gas and the second optical path is longer than the first optical path.

In a number of instances, the concentrations of the gases to be measured are expected to lie within known ranges, and the lengths of the optical paths are such that whenever a gas to be measured is present at any concentration within its expected range, the intensity of infrared radiation at the specific wavelength absorbed by that gas is within a measuring range of the detector for that wavelength. In some instances of the method, whenever a gas is present at any concentration within its expected range, the optical path lengths are such that the measured absorbance by that gas lies in a range from 0.01 to 2.0, and possibly 0.05 or 0.1 to 2.0. Absorbance in this range is likely to be within the useful working range of an infrared detector and associated electronic circuitry.

The apparatus and method of this disclosure are concerned with measuring concentrations of a gas or of more than one gas in a surrounding fluid. Possible applications in which the surrounding fluid is a liquid include checking water in the vicinity of a buried pipeline for any leakage of gas from the pipeline, measurement of the concentrations of hydrocarbon gases dissolved in crude oil (e.g., using apparatus on a subsurface tool or installation), mud logging, i.e. measuring one or more gases in drilling fluid returning to the surface from a wellbore, quantitative measurement of gases ( e.g. hydrocarbons, carbon dioxide) leaking from cap rocks, or leaking from abandoned oil wells, quantitative measurement of gases generated by landfills and other waste sites, quantitative measurement of biogas generation by agricultural waste, monitoring the gases generated in lakes, monitoring dissolved gases in transformer oils, measuring gases dissolved in sea water and measuring isotope concentrations where an atom in a gas molecule is present as more than one isotope, for instance $^{12}CO_2$ and $^{13}CO_2$ dissolved in seawater.

BRIEF DESCRIPTION OF DRAWINGS

The subject disclosure is further described in the detailed description which follows, in reference to the noted plurality of drawings by way of non-limiting examples of the subject disclosure, in which like reference numerals represent similar parts throughout the several views of the drawings, and wherein:

Fig 1 is a cross sectional view, on line A-A of Fig 2, of an apparatus for measuring two gases and a reference gas when the apparatus uses a single infrared radiation source;

Fig 2 is a top view onto the apparatus of Fig 1, partly broken away;

Fig 3 is a cross sectional view of an apparatus with two infrared radiation sources and one detector;

Fig 4 is a cross sectional view, on line C-C of Fig 5, of the enclosed internal space of another apparatus for measuring two gases and a reference gas when the apparatus has a single infrared radiation source;

Fig 5 is a cross sectional view on line B-B of Fig 4;

Fig 6 is a cross sectional view, on line D-D of Fig 7, of the enclosed internal space of a further apparatus for measuring two gases and a reference gas when the apparatus uses a single infrared radiation source;

Fig 7 is a cross sectional view, on line E-E of Fig 6;

Fig 8 is a cross sectional view, similar to Fig 1, of apparatus used in Example 1, below;

Fig 9 is a similar cross sectional view to Fig 8, showing another form of apparatus;

Fig 10 shows the filter array of Fig 9, in a view looking in the direction of arrows F-F;

Fig 11 is a cross sectional view, similar to Fig 8, showing a spectrometer as detector; and

Fig 12 is a flow chart illustrating a procedure set out in Example 1.

DETAILED DESCRIPTION

The particulars shown herein are by way of example and for purposes of illustrative discussion of the embodiments of the subject disclosure only and are presented in the cause of providing what is believed to be the most useful and readily understood description of the principles and conceptual aspects of the subject disclosure. In this regard, no attempt is made to show structural details in more detail than is necessary for the fundamental understanding of the subject disclosure, the description taken with the drawings making apparent to those skilled in the art how the several forms of the subject disclosure may be embodied in practice. Furthermore, like reference numbers and designations in the various drawings indicate like elements.

Many gas molecules have characteristic absorption peaks in the mid infrared region (wavelength 2-20 micron) of their absorption spectra. Gas concentrations can be determined by measuring absorption in this range and can be made specific to individual gases by measuring absorption at specific wavelengths. Measurement can be made at a specific wavelength by using a monochromatic laser as the infrared radiation source (if a monochromatic laser operating at the required wavelength is available) or by using a broad band infrared radiation source and passing the infrared radiation through a narrow bandpass filter which allows passage of infrared radiation absorbed by the gas, but blocks infrared radiation at wavelengths absorbed by other gases which may be present. Detectors used to measure intensity of infrared radiation in order to determine absorption may be non-dispersive infrared (NDIR) detectors where non-dispersive means that the radiation is not dispersed by a prism or diffraction grating to separate the radiation into different wavelengths. The infrared detector of an NDIR detector may be a photodiode. Other possibilities for use as a detector are a bolometer, a thermopile or a pyroelectric detector. These various detectors are electrical devices which are connected into electrical circuitry to provide measurements of the intensity of infrared radiation falling on them.

A further possibility to is to receive the infrared radiation which has passed through a gas by using a dispersive device, such as a spectrometer, to measure intensity at the or each required wavelength.

Measurement of infrared radiation intensity at a wavelength where an analyte gas absorbs, but other gases present do not absorb, enables determination of absorbance by that analyte gas. Concentration of the analyte gas can then be determined from the absorbance.

The absorbance (A) measured by an infrared detector is defined by:

$$A \;=\; -\ln\left(\frac{I}{I_o}\right) \qquad\qquad (1)$$

where $I_o$ and $I$ are the intensities of the radiation reaching the infrared detector in the absence and presence of absorbing species. The values of $I$ and $I_o$ are conventionally measured at the same wavelength and using the same apparatus so that changes within the apparatus such as changes in the intensity of the infrared source do not affect the determination of absorbance.

According to the Beer-Lambert law, the absorbance (A) at a given wavelength ($\lambda$) is directly proportional to the concentrations ($c_i$) of each species ($i$) absorbing at that wavelength ($\lambda$), the absorption coefficient ($\varepsilon_i$), which is also referred to as absorptivity, of each species $i$ and the optical path length (*L*). If there is only a single absorbing species (*i*) the formula for absorbance at wavelength ($\lambda$) is:

$$A = \varepsilon_{i\lambda} L c_i \qquad\qquad (2)$$

and so the concentration of an analyte gas can be determined from the absorbance at a wavelength where the analyte gas absorbs but other gases present do not absorb. If there is absorption by more than one species, the formula becomes a summation:

$$A = \sum_i \varepsilon_{i\lambda} L c_i \qquad\qquad (3)$$

When measuring absorption of infrared radiation by an analyte gas in an enclosure, it may be inconvenient or impractical to remove all the analyte gas by flushing with other gas in order to measure $I_o$. An approach which avoids the need to flush all the analyte gas from the cell is to measure absorption at a reference wavelength ($\lambda_r$) where there is no absorption by the analyte gas. A modified absorbance $A_m$ can be defined by:

$$A_m = - \ln\left(\frac{I(\lambda)}{I(\lambda_r)}\right) \qquad\qquad (4)$$

where $I(\lambda)$ is the intensity at a chosen wavelength ($\lambda$) at which the analyte gas or gases absorb and $I(\lambda_r)$ is the intensity at a reference wavelength ($\lambda_r$). This reference wavelength may be a wavelength at which there is absorption by a reference gas deliberately added to the gas mixture and maintained at a constant concentration but there is no significant absorption by any of the components being analysed. Another possibility, which avoids the need to maintain a reference gas at a constant concentration and so may be more convenient, is to find a wavelength at which there is no absorption by any gas present in the mixture, and use that wavelength as reference by using measured intensity at that wavelength as the reference intensity $I(\lambda_r)$. It is assumed that there is a constant relationship between $I_o(\lambda)$ and $I(\lambda_r)$ of the form $I(\lambda_r) = k I_o(\lambda)$, where k is a constant (k>0), and therefore:

$$A_m = - \ln\left(\frac{I(\lambda)}{k I_o(\lambda)}\right) = A + \ln(k) \qquad\qquad (5)$$

An infrared detector such as a photodiode or thermopile has a range of intensities which it can measure accurately and this places a limitation on measuring one gas over a wide concentration range and/or measuring more than one analyte gas in a gas mixture. In an embodiment, measurement is made using more than one optical path where the paths differ in length. This may extend the range of concentration over which a single analyte gas can be measured, or a plurality of analyte gases in a gas mixture are measured using different optical paths for different analyte gases. In the latter case, the optical paths may have lengths chosen so that the ranges of concentration expected for individual analyte gases correspond to measured absorbances within the measuring range(s) of the infrared detector or detectors.

Measurements of intensity of received infrared radiation can generally be made with sufficient accuracy if the absorbance is in a range from 0.01 to 2.0 with 0.1 to 2.0 being desirable.

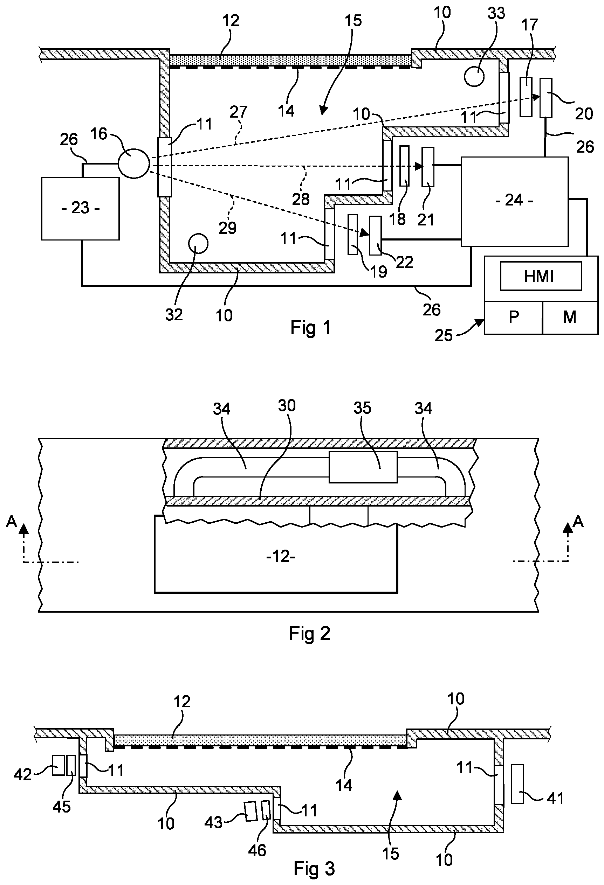

Figs 1 and 2 show one embodiment of an apparatus according to the present disclosure. This apparatus has one infrared radiation source sending infrared radiation along three optical paths of different lengths. For the purpose of explanation, it is assumed that the apparatus is used to measure the concentrations of two gases, each of which absorbs infrared radiation at a wavelength where no other gas in the mixture has significant absorption. Also a reference gas which is present in the mixture has a wavelength at which it absorbs but no other gas in the mixture has significant absorption.

Structural walls 10 of the apparatus enclose an interior space 15 within the apparatus. The structural walls incorporate a number of windows 11 which allow passage of infrared radiation and may be made of diamond. The interior space has an inlet opening at which a gas permeable membrane 12 is supported by a mesh 14. This membrane prevents liquid from entering the interior space 15 but allows gas dissolved in the surrounding liquid to come out of solution and diffuse through the membrane into the interior space. The membrane 12 may be a composite membrane formed of a semi permeable material applied to support layers of a porous/highly permeable substrate. Other materials which are able to transmit infrared radiation may be used for windows. Possibilities include zinc selenide, silicon, germanium, sapphire and cubic zirconia.

A possible composition of a membrane which is permeable to gaseous hydrocarbons and also permeable to carbon dioxide is a gas selective layer of polydimethylsiloxane (PDMS) over a microporous layer of polyvinylidene fluoride (PVDF) on a non-woven support layer of polyphenylene sulphide (PPS). A supplier of gas-permeable membranes is Membrane Technology and Research Inc, Newark, California.

An infrared radiation source 16 is positioned adjacent to a window 11 at one end of the interior space. Infrared radiation from the source 16 crosses the interior space to further windows 11 and three narrow bandpass filters 17, 18, 19 which each pass infrared radiation having a narrow bandwidth centered at a specific wavelength. The filtered infrared radiation is received by three infrared detectors 20, 21, 22. The broken lines 27, 28, 29 indicate that there are separate optical paths from the source 16 through the filters 17, 18, 19 to the infrared detectors.

The infrared detectors are connected to a controlling electronics package 24. The electrical circuits of this electronics package use the detectors to measure the intensity of infrared radiation reaching each detector. The electronics package 18 may also convert the measurements from analogue to digital and may be connectable to a computer 25 which incorporates a processor P, memory M and a human/machine interface HMI such as a graphic display and a keyboard or a touch screen. This electronics package is also connected to a power supply 23 for the source 16. The electrical connections are indicated 26.

The wavelength of filter 17 is chosen so as to pass infrared radiation with a wavelength corresponding to an absorption peak in the infrared spectrum of a first gas in the mixture diffusing into the interior space through the membrane 12. Further, in this embodiment, the wavelength passed by the filter 17 is also chosen to be a wavelength which is not significantly absorbed by other gases in the mixture. The filter 18 is chosen to pass infrared radiation at a different wavelength corresponding to an absorption peak in the spectrum of a second gas in the mixture but not absorbed by any other gas. The filter 19 is chosen so as to pass infrared radiation at a third wavelength corresponding to an absorption peak in a wavelength of a third gas which is expected to be always present in the gas mixture and which acts as a reference, as mentioned earlier. The wavelength passed by the filter 19 is chosen so that it is not absorbed by the first and second gases. An alternative possibility is that the filter 19 is chosen to pass radiation at a wavelength where no gas in the mixture absorbs, and this provides a reference.

The optical paths from the source 16 to each of the infrared detectors 20, 21, 22 have different lengths through the enclosed space 15 and are chosen so that expected concentrations of the first, second and reference gases will absorb amounts of infrared radiation which are neither smaller than nor greater than the amounts which these infrared detectors can measure. It should be appreciated that the drawings are schematic and are intended to assist explanation. The optical path lengths may be longer and may differ from each other by more than is shown.

The infrared radiation source in this embodiment is a broadband source, such as an incandescent lamp or some other heated body. Silicon carbide heating elements available under the e.g. Globar can maintain a constant temperature and have a good working life. The infrared detectors may be photodiodes or thermopiles.

A narrow bandpass filter will have a peak wavelength at which transmission is maximum and may be such that there is no more than 50% of the maximum transmission at 250 nanometres either side of the peak wavelength. One supplier of narrow bandpass filters is Andover Corporation, Salem, New Hampshire.

Figs 1 and 2 show a possible addition to the apparatus as so far described. Part of the structure enclosing the interior space is an internal wall 30. Holes 32, 33 through this wall are connected by tubing 34 to an enclosure 35 containing a pump which draws gas mixture from the interior space through hole 33 and passes it back into the interior space through hole 32, thus providing mixing and a uniform composition of the gas mixture within the interior space.

Fig 3 shows a different arrangement to that in Figs 1 and 2. As before, structure 10 of the apparatus encloses an interior space 15 which has an inlet opening with a membrane 12 which allows passage of gases but prevents entry of liquid. The apparatus has a single infrared detector 41 and two infrared sources 42, 43 with narrow bandpass filters 45, 46 in front of them. For operation the sources 42, 43 are switched on alternately. When source 42 is switched on, infrared radiation at a wavelength absorbed by only a first gas passes through filter 45 and a window 11 and travels through the interior space to another window 11 and then the infrared detector 41. When source 43 is switched on, infrared radiation at a wavelength absorbed by only a second gas, passes through filter 46 and a window 11 and travels for a shorter distance through the interior space to the infrared detector 41.

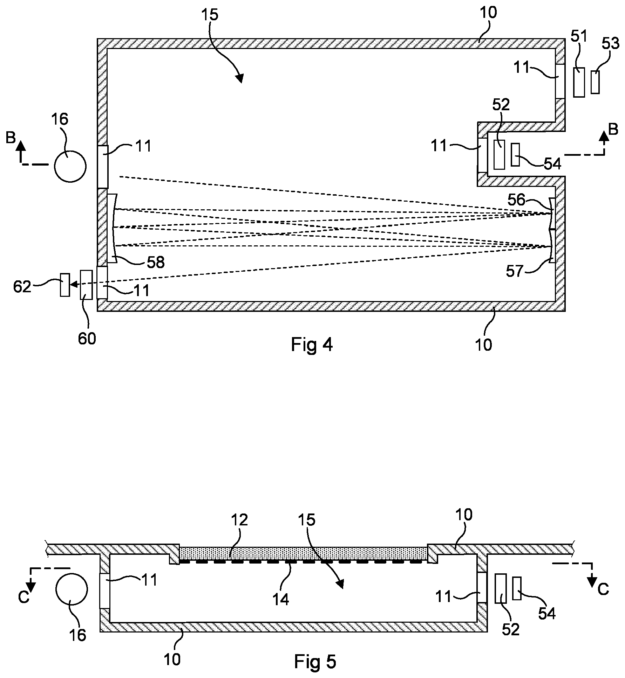

Figs 4 and 5 show a further possibility. Structural walls 10 of the apparatus again enclose an interior space 15 with an inlet opening at which a gas permeable membrane 12 is supported by a mesh 14. An infrared source 16 is fitted near a window 11 into the interior space. Infrared radiation from the source 16 travels across the interior space 15 and through further windows 11 to narrow bandpass filters 51, 52 which pass infrared radiation at specific wavelengths to infrared detectors 53, 54. Infrared radiation from the source 16 also crosses the interior space 15 to a mirror 56 which is part of a system of three concave mirrors 56, 57 and 58. The two mirrors 56, 57 are positioned side by side and their focal points are at the mirror 58. The focal point of the mirror 58 is at the point where the mirrors 56 and 57 contact each other. This positioning of three mirrors is a known optical arrangement, termed a White cell, which creates a long optical path shown with broken lines. Infrared radiation from the source is reflected by mirror 56 towards mirror 58 and the optical path then crosses the interior space five more times until the mirror 57 reflects the infrared radiation through a window 11 to a narrow bandpass filter 60 and infrared detector 62. Thus the optical path crosses the interior space eight times.

Similarly to the arrangement in Figs 1 and 2, the wavelength passed by the filter 52 is only absorbed by a first gas in the mixture which has diffused through the membrane 12 into the interior space 15, the wavelength passed by the filter 60 is only absorbed by a second gas in the mixture and the wavelength passed by the filter 51 is only absorbed by a reference gas in the mixture, or alternatively is not absorbed by any gas present in the mixture. The long, folded, optical path provided by the mirrors 56, 57 and 58 may be used to provide a measurable amount of absorbance by a second gas present at lower concentration than the first gas.

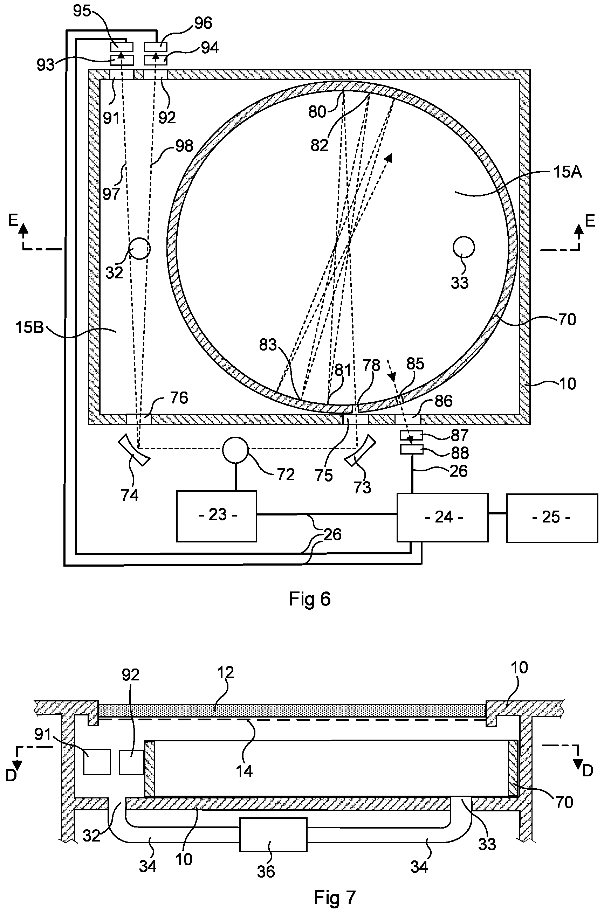

Figs 6 and 7 show another possible arrangement. As with previously mentioned possibilities, structural walls 10 of the apparatus again enclose an interior space with an inlet opening at which a gas permeable membrane 12 is supported by a mesh 14.

Spaced from the mesh 14 is a cylindrical mirror 70 which is reflective on its internal cylindrical surface and is used to provide a long optical path. The interior space enclosed by the structural walls 10 includes both a volume 15A encircled by the mirror 70 and a volume 15B outside this mirror. These volumes are not isolated from each other, because both can receive gas diffusing through the membrane 12 and as shown by Fig 7 the mirror 70 is spaced from the membrane 12 and mesh 14.

An infrared radiation source 72 may be an incandescent lamp or a heated silicon carbide rod. Infrared radiation from this source is reflected by two mirrors 73, 74 through windows into the interior space enclosed by structural walls 10. The two mirrors 73, 74 have curved surfaces which reduce the divergence of the infrared radiation beams.

The infrared radiation beam reflected by mirror 73 is used to measure absorbance by a first gas present at a low concentration in the gas mixture entering through the membrane 12.

The beam reflected by mirror 73 passes through a window 75 in a structural wall and through an adjacent small aperture 78 in the cylindrical mirror 70. At the point 80 it is reflected back across the space within the mirror 70 to a point 81 spaced from the entry point 78 after which it is reflected to a point 82 spaced from the point 80 which then reflects the beam to a point 83 spaced from the point 81. The beam continues to cross to and fro across the space within the mirror 70 with the reflection points stepping circumferentially until the beam reaches an exit aperture 85. The beam passes through a window 86 and a narrow bandpass filter 87 to an infrared detector 88 which measures the beam intensity.

Infrared radiation from the source 72 which is reflected by the curved mirror 74 is used in measuring the concentration of a second gas and to provide a reference. The mirror 74 reflects the infrared beam through a window 76 in a structural wall. The beam then crosses the internal space 15B to windows 91, 92 and narrow bandpass filters 93, 94. The infrared radiation passing through these filters is measured by detectors 95, 96. The optical path 97 leading to the filter 93 and detector 95 is used for measuring absorbance by a second gas in the gas mixture and the optical path indicated at 98, with filter 94 and detector 96 is used for measuring absorbance by a reference gas or to measure at a wavelength where there is no absorption. In this embodiment the length of the path 98 between windows 76 and 92 used for absorbance by the reference gas is shown as the same as the path length 97 between windows 76 and 91 used for absorbance by the second gas whose concentration is measured. However, the apparatus could be constructed with different lengths of the optical paths 97, 98 for the second and reference gases.

The infrared detectors 88, 95, 96 are connected to a controlling electronics package 24 which uses the infrared detectors to measure the intensity of infrared radiation reaching each detector. This electronics package is also connected to a power supply 23 for the source 16 and may be connected to a computer 25. The electrical connections are indicated 26.

A possible addition to the apparatus of Fig 6 as so far described is the provision of a circulating pump similar to that in Fig 2. Holes 32, 33 through the structural wall opposite the membrane 12 are connected by tubing 34 to an enclosure 35 containing a pump which draws gas mixture from the interior space 15A through hole 33 and circulates it back into the interior space 15B through hole 32, thus providing mixing and a uniform composition of the gas mixture within the interior space of the apparatus.

**Example 1**

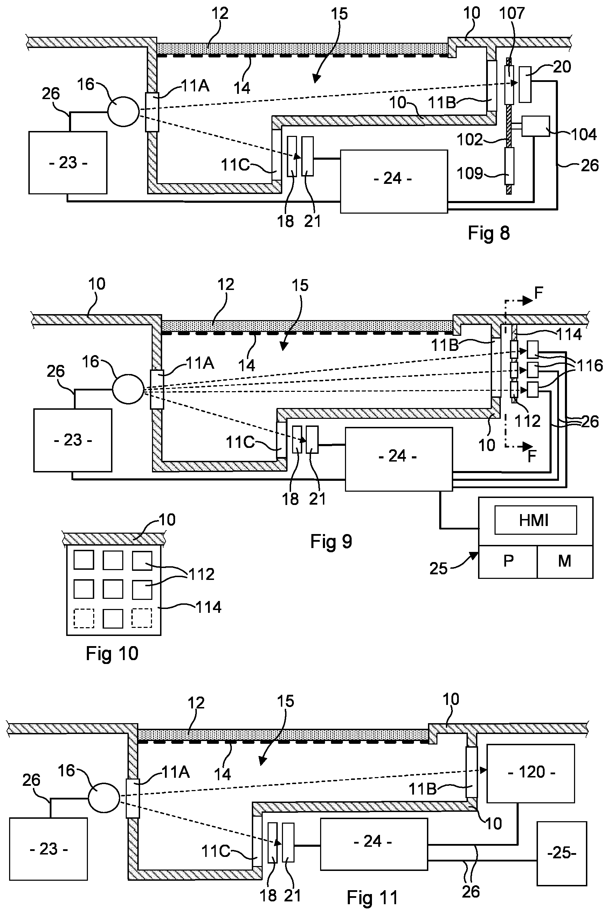

This example can be carried out using forms of apparatus shown in Figs 8 to 11. These forms of apparatus are similar to that shown in Fig 1, but do not measure a reference gas and do not have the filter 19 and detector 22 shown in Fig 1. In this example the apparatus is used for measuring gases present in an aqueous drilling fluid. Hydrocarbons expected to be present are naturally occurring methane ($CH_4$), ethane ($C_2H_6$), propane ($C_3H_8$), n-butane (n-$C_4H_{10}$) and iso-butane (iso-$C_4H_{10}$) plus ethylene ($C_2H_4$) and propylene ($C_3H_6$) which may be formed by chemical reaction in the vicinity of the drill bit.

With all three forms of apparatus the concentration of the most abundant gas, which is methane, is determined from measurements made using the shorter optical path from window 11A to window 11C and then extending through bandpass filter 18 to detector 21. The concentrations of other gases are determined from measurements using the longer optical path from window 11A through window 11B and continuing to infrared detector 20. For this purpose, a number of narrow bandpass filters are mounted on a wheel 102 which can be rotated by a stepper motor 104 to position one filter 107 between the window 11B and infrared detector 20. Other filters on the wheel 102 pass infrared at different wavelengths to the filter 107 and one of these is a filter passing infrared radiation at a reference wavelength where there is no absorption by any of the hydrocarbons. A filter which is not currently in the optical path is seen at 109.

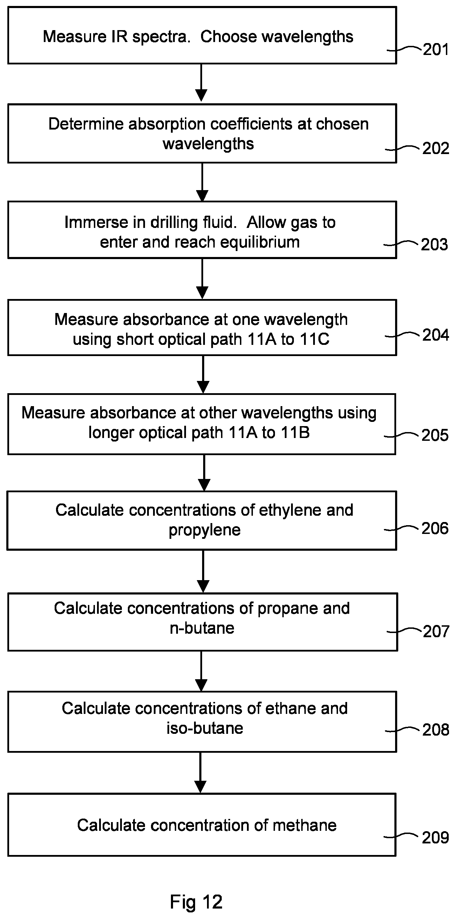

As preparatory work, which might be done as a one-time-only task by a manufacturer of apparatus embodying the present disclosure, samples of pure gases were used in choosing wavelengths for absorbance measurements. Each of these samples was placed in a conventional gas-cell used for measuring infra-red spectra of gases and the spectrum of each gas was measured over a wavelength range from $5\mu m$ to $12\mu m$. Wavelengths for measurement using apparatus as in Fig 8 were then chosen from these spectra. It was found that ethylene could be measured at a specific wavelength where none of the other gases absorbed. Similarly, propylene could be measured at another specific wavelength where no other gas absorbed. However, for each of the paraffinic gases there was no wavelength where absorption is unique to that gas. The concentrations of gases could however be calculated from a number of measurements at wavelengths where one paraffinic gas absorbed more strongly than other gases. The overall procedure is shown by the flowchart which is Fig 12. The first step 201 was the preparatory work mentioned above of obtaining the infrared spectra of the gases and choosing wavelengths for subsequent measurements.

The following table lists the individual gases together with other gases (termed interfering gases) which also absorbed at the wavelength chosen for measurement. Whether the absorption by these interfering gases was small or large is also indicated.

| Gas | Measurement wavelength ($\mu m$) | Interfering gases |
|---|---|---|
| methane | 8.051 | ethane (small), propane (small), n-butane (small), iso-butane (small) |
| ethane | 11.943 | ethylene (large), propylene (large) propane (small) |
| propane | 9.437 | ethylene (large), propylene (large) |
| n-butane | 10.132 | ethylene (large), propylene (large) |
| i-butane | 8.513 | propane (small), propylene (small) |
| ethylene | 5.206 | none |
| propylene | 5.534 | none |

The second step 202 was also preparatory. This was determining the absorption coefficient of each of the expected gases at every one of the chosen wavelengths. For each individual gas the absorption coefficients at every chosen wavelength were determined using a sample of the pure gas at a known concentration in nitrogen as diluent. These determinations of absorption coefficient were made using the conventional gas cell.

Use of apparatus according to Fig 8 begins at step 203 of the overall procedure. This is to immerse the apparatus in the drilling fluid, and wait for a period of time allowing gases to diffuse through the membrane 12 into the internal space 15 until gas composition in space 15 reaches equilibrium.

Step 204 is to measure absorption of infrared by the gas which has diffused into the interior space 15, using filter 18 and infrared detector 21 to measure at the wavelength chosen for methane in step 201. This is followed by step 205 which is to measure absorbance at every other wavelength chosen in step 201. This can be achieved using the detector 20 and the sequence of filters carried by wheel 102 which is rotated by stepper motor to place each filter in turn at the position 107.

Steps 206 onwards are calculations using the absorption coefficients determined in preparatory step 202 and the absorbances measured at steps 204 and 205. Step 206 is to calculate the concentrations of ethylene and propylene from the measured absorbances using the length of the optical path across space 15 between the windows 11A and 11B, and the absorption coefficients for these gases determined in the preparatory step 202. The equations given by the Beer-Lambert law are:

$$A_{ey} = C_{ey}\varepsilon_{ey(ey)}L_1 \quad \text{and} \quad A_{py} = C_{py}\varepsilon_{py(py)}L_1$$

where:

$A_{ey}$ is the absorbance measured at the wavelength 5.206μm chosen for ethylene in step 201 and $\varepsilon_{ey(ey)}$ is the absorption coefficient of ethylene at this wavelength,

$A_{py}$ is the absorbance measured at the wavelength 5.534μm chosen for propylene in step 201 and $\varepsilon_{py(py)}$ is the absorption coefficient of propylene at this wavelength,

$C_{ey}$ and $C_{py}$ are the concentrations of ethylene and propylene within the space 15, and

$L_1$ is the optical path length between the windows 11A and 11B.

Step 207 of the procedure is to calculate the concentrations of propane and n-butane, in a calculation using the concentrations of interfering gases ethylene and propylene calculated in step 206. For propane the equation given by the Beer-Lambert law is

$$A_p = C_p\varepsilon_{p(p)}L_1 + C_{ey}\varepsilon_{ey(p)}L_1 + C_{py}\varepsilon_{py(p)}L_1$$

where:

$A_p$ is the absorbance measured at the wavelength chosen for propane in step 201,

$\varepsilon_{ey(p)}$ is the absorption coefficient of ethylene at this wavelength,

$\varepsilon_{py(p)}$ is the absorption coefficient of propylene at this wavelength,

$C_p$ is the concentration of propane within the space 15,

$L_1$ is the optical path length between the windows 11A and 11B, and

Other terms in the equation are as stated previously.

The concentration of propane $C_p$ is the only unknown term in the equation and so can be calculated. Calculation of the concentration of n-butane is similar to the calculation for propane.

Step 208 of the procedure is to calculate the concentrations of iso-butane and ethane using concentrations of interfering gases calculated in previous steps. For iso-butane the only interfering gases were propane and propylene, so the equation given by the Beer-Lambert law is

$$A_{ibu} = C_{ibu}\varepsilon_{ibu(ibu)}L_1 + C_p\varepsilon_{p(ibu)}L_1 + C_{py}\varepsilon_{py(ibu)}L_1$$

where:

$A_{ibu}$ is the absorbance measured at the wavelength chosen for iso-butane in step 201,

$\varepsilon_{ibu(ibu)}$, $\varepsilon_{ey(ibu)}$ and $\varepsilon_{py(ibu)}$ are the absorption coefficients of iso-butane, propane and propylene at this wavelength,

$C_{ibu}$ is the concentration of iso-butane within the space 15, and

$L_1$ is the optical path length between the windows 11A and 11B.

For ethane the interfering gases were propane, ethylene and propylene and so the equation given by the Beer-Lambert law is

$$A_e = C_e\varepsilon_{e(e)}L_1 + C_p\varepsilon_{p(e)}L_1 + C_{ey}\varepsilon_{ey(e)}L_1 + C_{py}\varepsilon_{py(e)}L_1$$

where:

$A_e$ is the measured absorbance at the wavelength chosen for ethane in step 201, $\varepsilon_{e(e)}$,

$\varepsilon_{p(e)}$ and $\varepsilon_{py(e)}$ are the absorption coefficients of ethane, propane, ethylene and propylene at this wavelength

$C_e$ is the concentration of ethane within the space 15, and

$L_1$ is the optical path length between the windows 11A and 11B.

Step 209 of the procedure is to calculate the concentration of methane using the concentrations of other gases previously calculated. Methane is expected to be at higher concentration than the other hydrocarbons and the shorter optical path length between windows 11A and 11C is used. This shorter optical path passes through a fixed filter 110. The equation given by the Beer-Lambert law is:

$$A_m = C_m \varepsilon_{m(m)} L_2 + C_e \varepsilon_{e(m)} L_2 + C_p \varepsilon_{p(m)} L_2 + C_{nbu} \varepsilon_{nbu(m)} L_2 + C_{ibu} \varepsilon_{ibu(m)} L_2$$

where:

$A_m$ is the measured absorbance at the wavelength chosen for methane in step 201,

$\varepsilon_{m(m)}$, $\varepsilon_{e(m)}$, $\varepsilon_{p(m)}$, $\varepsilon_{nbu(m)}$ and $\varepsilon_{ibu(m)}$ are the absorption coefficients of methane, ethane, propane, n-butane and iso-butane at this wavelength

$C_m$, $C_e$, $C_p$, $C_{nbu}$ and $C_{ibu}$ are the concentrations of methane, ethane, propane, n-butane and iso-butane within the space 15, and

$L_2$ is the optical path length between the windows 11A and 11C.

The concentration of methane $C_m$ is the only unknown and so it can be calculated.

Figs 9 and 10 show another form of apparatus which can be used to carry out the procedure of this example. The wheel 102 and stepper motor 104 are not used. Instead narrow bandpass filters 112 for six wavelengths at which measurements are made and a seventh filter for a reference wavelength at which no gas absorbs, are mounted on a fixed support 114 positioned for infrared radiation to pass through these filters after the window 11B. The positions of the filters 112 in an array on the support 114 is shown by Fig 10. There are positions for nine filters on the support 114 but two positions where no filter is fitted are shown with broken lines. The radiation passing through each of the filters 112 is received by a separate detector 116 so that each detector receives radiation from one filter 112. These detectors 116 are electrically connected to the electronics package 24.

Because the filters 112 are at different positions in the array, the optical path lengths from the window 11A to the window 11B are slightly different for the different specific wavelengths at which measurements are made and the path length for each specific wavelength and bandpass filter 112 is used in the calculations above.

Fig 11 shows a further possibility. Narrow bandpass filters are not used. Infrared radiation passing through the window 11B is received by a spectrometer 120 which measures received radiation at every wavelength within a range. The measured intensities at the required wavelengths are communicated from the spectrometer 120 to the controlling electronics package 24.

**Example 2**

This example illustrates how the provision of two optical paths of different length can extend the measuring range for a single gas. In this example that gas is methane.

The absorbance of pure methane at a pressure of 1 bar and temperature of 23°C measured at the wavelength chosen in the previous example, measured in a gas cell with a path length of 0.1 metre, is 0.58. From this it can be calculated that with the same path length of 0.1 metre, a mixture of methane and a diluent gas which has no absorption at the same wavelength (for example nitrogen) would have an absorbance of 0.1 at a concentration of 7 mole/m$^3$. With a second optical path of ten times the length, i.e a length of 1 metre (possibly a folded optical path such as illustrated by Fig 4) an absorbance of 0.1 along this longer path would correspond to one tenth the concentration, i.e. 0.7 mole/ m$^3$, of methane.

The following table sets out several concentrations of methane and the absorbances which will be observed using the shorter and longer path lengths. This table also includes concentrations corresponding to an absorbance of 0.03, which is the lowest detectable absorbance with the apparatus used.

| Absorbance | Methane concentration with path length 0 1 metre | Methane concentration with path length 1 metre |
|---|---|---|
| 0.58 | 40 mole/m$^3$ | |
| 1 | | 7 mole/m$^3$ |
| 2 | | 14 mole/m$^3$ |
| 0.1 | 7 mole/m$^3$ | 0.7 mole/m$^3$ |
| 0.03 | 2.1 mole/m$^3$ | 0.21 mole/m$^3$ |

It can be seen from this table that with absorbance in a range of 0.1 to 2, or a narrower range of 0.1 to 1, a path length of 0.1 metre enables measurement from 40 mole/m$^3$ (pure methane) to 7 mole/m$^3$ while a path length of 1 metre enables measurement over a range extending down to 0.7 mole/m$^3$. The combined range provided by two optical paths in accordance with this disclosure extends from 40 mole/m$^3$ to 0.7 mole/m$^3$ and at the lowest detectable absorbance the range extends down to 0.21 mole/m$^3$.

### Example 3

In this example the apparatus of Figs 9 and 10 is configured to make measurements with less computation. The support 114 carries filters 112 for three wavelengths and a reference wavelength at which no absorption is expected. One of these filters 112 and the filter 18 are both narrow bandpass filters for the measurement wavelength used for methane in Example 1 above. This provision of two optical paths for measuring absorbance by methane gives an extended measuring range, as shown in Example 2 above. It is expected that interfering absorption by other alkanes at this wavelength will be small enough to ignore, because methane is likely to be the most abundant hydrocarbon and at this wavelength the absorption coefficients of ethane, propane and butanes are much smaller than the absorption coefficient of methane.

Another of the filters 112 is a narrow bandpass filter for the wavelength used for ethane in Example 1 and the third filter 112 is a narrow bandpass filter for a wavelength of $6.78\mu m$ at which gaseous and volatile alkanes other than methane have an intense absorption band. Measurement at this wavelength gives a measurement of the combined concentration of gaseous and volatile alkanes other than methane.

This apparatus may be used when testing for leakage from a pipeline or testing for the presence of natural gas. It can provide a measurement of methane concentration if methane is found to be present, and also provide measurements of low concentrations of methane and higher alkanes in order to confirm their absence when testing for leakage.

### Example 4

Carbon dioxide ($CO_2$) is one of the key parameters to understand the oceanic carbon cycle and its spatial and temporal evolution. Understanding the dynamics of the $CO_2$ exchanges between the oceans and the atmosphere helps understanding the carbon balance and assessing the capacity of the atmosphere to regulate the impact of anthropogenic $CO_2$ on climate change. Measurements of $CO_2$ in the atmosphere, ocean surface and in deep ocean bring complementary information that, together with oceanographic models, improve the overall understanding of the oceanic carbon cycle as well as reduce the uncertainties on historic data and/or forecasts.

Another parameter of environmental significance is the isotope ratio $^{13}CO_2/^{12}CO_2$ in sea water.

Changes in this isotope ratio depend on a number of factors including fractionation during photosynthesis as plants absorb $CO_2$ with heavier isotopes less efficiently.

While in-situ detectors for $pCO_2$ measurements in oceanic applications exist, the in-situ measurement of the $CO_2$ isotope ratio, $^{12}CO_2/^{13}CO_2$, is a technology that is still in early development phases. Mass spectroscopy (MS) and cavity ringdown spectroscopy (CRS) have been used for the measurement of oceanic $^{13}CO_2$. However, MS requires collection of samples and a labour-intensive sample processing. CRS on the other side could potentially be deployed continuously, but requires bulk systems with large power requirements, making its in-situ deployment difficult.

The average concentration of $CO_2$ in the atmosphere is about 400ppm, while the concentration in the oceans, commonly given by its partial pressure (pCO2), has been measured from about $100\mu atm$ to $1200\ \mu atm$.

$CO_2$ is a highly absorbing gas with a well-defined strong signature in the midinfrared region. In this example, the most stable isotope, $^{12}CO_2$, is measured at $4.234\mu m$ while $^{13}CO_2$ is measured at $4.415\mu m$. The typical $^{12}CO_2/^{13}CO_2$ concentration ratio in nature is about 100, which creates a significant disparity between the measuring ranges required for $^{12}CO_2$ and $^{13}CO_2$.

Absorbance at wavelength $\lambda=4.234\ \mu m$ ($2362\ cm^{-1}$) has a value of 2.20 for transmission of infrared radiation through pure $CO_2$ at a pressure of 1 bar and a temperature of 23°C and a very short optical path length of 1.05 mm. From the NIST Chemistry Workbook, the concentration of $CO_2$ is 40.82 mole/m$^3$ (0.0408 mole/l or 1.795 g/l) and the absorption coefficient is 51.33 m$^2$/mole. The concentration of $CO_2$ in the atmosphere is currently 412 ppm, which is 0.017 mole/m$^3$ (using a concentration of nitrogen of 40.62 mole/m$^3$ at a pressure of 1 bar and a temperature of 23°C). This concentration of $CO_2$, which is $^{12}CO_2$, gives an absorbance of 0.435 using an optical path length of 0.5 m. The concentration of $^{13}CO_2$ is expected to be approximately $1.7\times10^{-4}$ mole/m$^3$ and an optical path length of 50 m is required to give a similar value of absorbance.

Apparatus in accordance with this disclosure can provide these path lengths for measuring $CO_2$ with the two isotopes. The apparatus has a membrane admitting gas from seawater to an interior space. Within this interior space, one optical path uses mirrors as shown in Fig 4 to give a path length of 0.5 metre. Another optical path within the interior space is provided by a cylindrical mirror as shown in Fig 6. Within this mirror the optical path repeatedly extends diametrically across the mirror so as to give a path length of 50 metres.

Various embodiments of this disclosure have been set out above. These are intended to assist understanding of this disclosure, but not to limit it in any way. It should be appreciated that any features or possibilities described in combination may, where it is practical to do so, be used individually. Also, features or possibilities described in any embodiment may be used in any other embodiment, in so far as it is practical to do so.

In particular, it should be understood that any form of the present disclosure may have a second optical path which is at least one and a half times, or at least two times, the length of a first optical path. Any form of this disclosure may have one or more optical paths in which one or more mirrors change the direction of an optical path and increase the path length within the internal space for gas which enters through the permeable membrane. One or more mirrors to extend an optical path length may be used when there is a single infrared radiation source and a plurality of infrared detectors or when there is a plurality of radiation sources directing infrared radiation at a plurality of specific wavelengths into and across the internal space to a single infrared detector or more than one detector. Any type of radiation source may be used both when there is a single radiation source and when there is a plurality of radiation sources, and both with and without one or more mirrors to extend an optical path length. One or more radiation sources may be provided by a material which is heated to be incandescent and any such radiation sources may be electrically heated silicon carbide.

The number of optical paths is not limited. Any optical path may be arranged to measure a single gas at a specific wavelength (or even at more than one specific wavelength) or measure more than one gas at respective specific wavelengths. Any form of this disclosure may have a separate path for measuring at a reference wavelength, or a path used for measuring a gas at a specific wavelength may also be used for making measurement at another wavelength which is a reference wavelength. Any constructional form of this disclosure may use one or more than one narrow bandpass filters to provide measurement at one or more specific wavelengths determined by the filters or may use a spectrophotometer to make measurements at one or more wavelengths.

Various embodiments of this disclosure have been set out above. These are intended to assist understanding of this disclosure, but not to limit it in any way. It should be appreciated that any features or possibilities described in combination may, where it is practical to do so, be used individually. Also, features or possibilities mentioned in the following claims or described in any embodiment may be used in any other embodiment, in so far as it is practical to do so and in particular where two or more of the following claims are dependent on the same preceding claim, the reader should understand that the present disclosure includes any possible combination of any two or more or all of those dependent claims with each other and with that preceding claim.

**Claims**

1.   An apparatus for measuring concentration of one or more gases in a fluid, comprising:

an enclosed internal space within the apparatus to receive gas from the surrounding fluid, with at least one inlet to the internal space comprising a gas-permeable membrane separating the internal space from surrounding fluid while allowing gases to diffuse from the surrounding fluid into the internal space,
at least one infrared radiation source to send infrared radiation into the internal space,
at least one infrared radiation detector with connected circuitry to receive and measure the intensity of infrared radiation from the at least one source, and
at least two optical paths each extending from an infrared radiation source through the internal space to an infrared radiation detector, wherein the infrared radiation detector for each path is operable to measure the intensity of radiation at a specific wavelength, wherein the at least two optical paths comprise first and second optical paths which have different path lengths through the internal space.

2.   The apparatus of claim 1, wherein the second optical path has a length which is at least one and a half times longer than the first optical path.

3.   The apparatus of claim 2, wherein the second optical path comprises reflection at one or more mirrors within the internal space and/or wherein the second optical path extends into a cavity encircled by a mirror within the internal space and comprises a plurality of reflections across the cavity.

4.   The apparatus of any one of the preceding claims, wherein the infrared radiation detector which receives infrared radiation from first optical path is operable to measure the intensity of radiation at a first specific wavelength and the infrared radiation detector which receives infrared radiation from the second optical path is operable to measure the intensity of radiation at a second specific wavelength which is different from the first specific wavelength.

5.   The apparatus of claim 4, further comprising:
a third optical path extending from an infrared radiation source through the internal space to an infrared radiation detector which is operable to measure the intensity of radiation at a third specific wavelength which is different from the first and second specific wavelengths.

6.   The apparatus of any one of the preceding claims, wherein at least one optical path includes a narrow bandpass filter between the infrared radiation source which sends infrared radiation along the optical path and the infrared radiation detector which receives infrared radiation from the optical path.

7. The apparatus of any one of the preceding claims, having a single infrared radiation source which is a broadband source sending infrared radiation along the first and second optical paths to separate infrared radiation detectors, wherein each optical path includes a narrow bandpass filter which passes radiation at a specific wavelength, wherein the at least one radiation source preferably comprises electrically heated silicon carbide.

8. The apparatus of any one of the preceding claims, further comprising:
first and second infrared radiation sources, wherein the first infrared radiation source sends infrared radiation through a narrow bandpass filter, and along the first optical path through the internal space,

the second infrared radiation source sends infrared radiation through a second narrow bandpass filter passing a second specific wavelength and along the second optical path through the internal space, and
the first and second optical paths extend through the internal space to a single infrared detector operable to measure the intensities of infrared radiation arriving along the first and second optical paths.

9. The apparatus of any one of the preceding claims, wherein at least one infrared radiation detector is a spectrophotometer operable to measure the intensity of infrared radiation across a range of wavelengths.

10. A method of measuring concentrations of one or more gases in a surrounding fluid comprising:

placing the membrane of apparatus according to claim 1 in contact with the surrounding fluid, and allowing gas to diffuse from the surrounding fluid through the gas permeable membrane into the internal space of the apparatus, sending infrared radiation along the first and second optical paths from the at least one source to the at least one detector, operating the at least one detector to measure the intensities of infrared radiation of one or more specific wavelengths received along the first and second optical paths, and computing at least one gas concentration from the measured intensities.

11. The method of claim 10, wherein the concentrations of the gases are expected to lie within known ranges, and the lengths of the optical paths are such that whenever a gas is present at any concentration within its expected range, the measured absorbance lies in a range from 0.01 to 2.0.

12. A method of measuring concentrations of two or more gases in a surrounding fluid comprising:

placing the membrane of apparatus according to claim 1 in contact with the surrounding fluid, so as to allow a mixture of gases to diffuse from the surrounding fluid through the gas permeable membrane into the internal space of the apparatus, sending infrared radiation along the first and second optical paths from the at least one source to the at least one detector, operating the infrared detector which receives infrared radiation from first optical path to measure the intensity of radiation at a first specific wavelength and operating the infrared radiation detector which receives infrared radiation from the second optical path to measure the intensity of radiation at a second specific wavelength which is different from the first specific wavelength, and computing at least two gas concentrations from the measurements.

13. The method of claim 12 which is a method of measuring concentrations of at least three gases and the method comprises operating at least one detector to measure the intensities of infrared radiation at two or more specific wavelengths.

14. The method of claim 12 or 13, wherein the concentrations of the gases are expected to lie within known ranges, and the lengths of the first and second optical paths are such that whenever a gas is present at any concentration within its expected range, the intensity of infrared radiation at the specific wavelength absorbed by that gas is within the measuring range of the detector for that wavelength and/or the measured intensity corresponds to an absorbance in a range from 0.01 to 2.0, wherein the lengths of the first and second optical paths preferably are such that whenever a gas is present at any concentration within its expected range, the measured intensity corresponds to an absorbance in a range from 0.1 to 2.0.

15. The method of any one of the claims 12 - 14, wherein the two gases are aliphatic hydrocarbons containing up to four carbon atoms per molecule and/or wherein the two gases have the same chemical formula but contain different isotopes of an atom.

Fig 1

Fig 2

Fig 3

Fig 4

Fig 5

Fig 6

Fig 7

Fig 8

Fig 9

Fig 10

Fig 11

```
┌──────────────────────────────────────────────┐
│  Measure IR spectra.  Choose wavelengths       │──── 201
└──────────────────────────────────────────────┘
                        │
                        ▼
┌──────────────────────────────────────────────┐
│  Determine absorption coefficients at chosen   │──── 202
│  wavelengths                                   │
└──────────────────────────────────────────────┘
                        │
                        ▼
┌──────────────────────────────────────────────┐
│  Immerse in drilling fluid.  Allow gas to      │──── 203
│  enter and reach equilibrium                   │
└──────────────────────────────────────────────┘
                        │
                        ▼
┌──────────────────────────────────────────────┐
│  Measure absorbance at one wavelength          │──── 204
│  using short optical path 11A to 11C           │
└──────────────────────────────────────────────┘
                        │
                        ▼
┌──────────────────────────────────────────────┐
│  Measure absorbance at other wavelengths using │──── 205
│  longer optical path 11A to 11B                │
└──────────────────────────────────────────────┘
                        │
                        ▼
┌──────────────────────────────────────────────┐
│  Calculate concentrations of ethylene and      │──── 206
│  propylene                                     │
└──────────────────────────────────────────────┘
                        │
                        ▼
┌──────────────────────────────────────────────┐
│  Calculate concentrations of propane and       │──── 207
│  n-butane                                      │
└──────────────────────────────────────────────┘
                        │
                        ▼
┌──────────────────────────────────────────────┐
│  Calculate concentrations of ethane and        │──── 208
│  iso-butane                                    │
└──────────────────────────────────────────────┘
                        │
                        ▼
┌──────────────────────────────────────────────┐
│  Calculate concentration of methane            │──── 209
└──────────────────────────────────────────────┘
```

Fig 12

Europäisches
Patentamt
European
Patent Office
Office européen
des brevets

# EUROPEAN SEARCH REPORT

**Application Number**

EP 25 19 7522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 122 223 A (SHANGHAI INST MICROSYS & INF) 29 October 2014 (2014-10-29) * paragraphs [0049], [0053], [0062], [0068] - [0071], [0076]; figure 1 * ----- | 1-15 | INV. G01N21/03 G01N21/3504 G01N21/61 |
| Y | WO 2023/009605 A1 (ANALOG DEVICES INC [US]) 2 February 2023 (2023-02-02) * paragraphs [0011] - [0012], [0037] - [0039], [0098], [0102] - [0104], [0148]; figures 2-3,5 * ----- | 1-15 | ADD. G01N21/31 |
| Y | US 6 037 592 A (SUNSHINE STEVEN S [US] ET AL) 14 March 2000 (2000-03-14) * column 2, lines 40-44 * ----- | 1-15 | |
| A | US 5 747 809 A (ECKSTROM DONALD J [US]) 5 May 1998 (1998-05-05) * column 6, lines 35-44 * ----- | 15 | |

**TECHNICAL FIELDS SEARCHED (IPC)**

G01N

The present search report has been drawn up for all claims

| Place of search | Date of completion of the search | Examiner |
|---|---|---|
| The Hague | 7 January 2026 | van Lith, Joris |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
...................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 19 7522

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2026

| Patent document cited in search report | | Publication date | Patent family member(s) | | Publication date |
|---|---|---|---|---|---|
| CN 104122223 | A | 29-10-2014 | NONE | | |
| WO 2023009605 | A1 | 02-02-2023 | US | 2024353323 A1 | 24-10-2024 |
| | | | WO | 2023009605 A1 | 02-02-2023 |
| US 6037592 | A | 14-03-2000 | CA | 2281552 A1 | 20-08-1998 |
| | | | US | 6037592 A | 14-03-2000 |
| | | | WO | 9836265 A1 | 20-08-1998 |
| US 5747809 | A | 05-05-1998 | AT | E214802 T1 | 15-04-2002 |
| | | | CA | 2256729 A1 | 18-12-1997 |
| | | | EP | 0904529 A1 | 31-03-1999 |
| | | | JP | 2000512757 A | 26-09-2000 |
| | | | US | 5747809 A | 05-05-1998 |
| | | | WO | 9747957 A1 | 18-12-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7434446 B

- US 10018606 B

**Non-patent literature cited in the description**

- **BRUMBOIU, A. O.** ; **HAWKER, D. P.** ; **NORQUAY, D. A.** ; **D. K. WOLCOTT**. Application of Semipermeable Membrane Technology in the Measurement of Hydrocarbon Gases in Drilling Fluids. *Paper presented at the SPE/AAPG Western Regional Meeting, Long Beach, California*, June 2000, https://doi.org/10.2118/62525-MS